**Europäisches Patentamt**

**European Patent Office**

**Office européen des brevets**

(19)

(11) **EP 1 569 390 A1**

(12) **EUROPEAN PATENT APPLICATION**

(43) Date of publication:
**31.08.2005 Bulletin 2005/35**

(51) Int Cl.⁷: **H04L 12/56**

(21) Application number: **04004391.1**

(22) Date of filing: **26.02.2004**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Zanoth, Christian**<br>  **54329 Konz (DE)**<br>• **Biewer, Patrick**<br>  **6186 Gonderange (LU)** |
| (71) Applicant: **SES Astra S.A.**<br>**6815 Château de Betzdorf (LU)** | (74) Representative: **Joppich, Martin**<br>**Intellectual Property Consultancy**<br>**Zeppelinstrasse 71-73**<br>**81669 München (DE)** |

(54) **Method and apparatus for allocating bandwidth to a plurality of user channels in a shared transmission channel**

(57) The present invention refers to a method and an apparatus for allocating bandwidth to a plurality of virtual channels within a shared transmission channel. It is an object of the invention to provide a method and an apparatus for allocating bandwidth to a plurality of virtual channels within a shared transmission channel which can be implemented on the basis of existing system components without the need to manipulate the underlying transmission protocolls. A method for solving this object comprises the following steps:

a) connecting each virtual channel having a virtual channel bandwidth with one of a plurality of user channels,

b) receiving incoming user data of each connected user channel and measuring the data flow rate of the incoming user data of each connected user channel,

c) setting each virtual channel bandwidth in accordance with the data flow rate of the incoming user data of the corresponding user channel,

d) transmitting outgoing user data corresponding to the incoming user data over the connected virtual channel and queuing the incoming user data if the virtual channel bandwidth is smaller than the data flow rate of the incoming user data,

e) measuring for each connected virtual channel the data flow rate of the outgoing user data,

f) tuning each virtual channel bandwidth such that the sum of the data flow rates of the outgoing user data corresponds to the bandwidth of the shared transmission channel, and

g) repeating steps b) to g).

Fig. 1

EP 1 569 390 A1

**Description**

The present invention refers to a method and an apparatus for allocating bandwidth to a plurality of virtual channels within a shared transmission channel.

US 2003/0154272 A1 discloses a traffic shaping method of a satellite link. The traffic shaping method employs a leaky bucket approach for each user which receives data via the satellite link. The throttling of the user data rate is achieved by controlling the TCP window sizes of the application server and/or by controlling the leak rate of the bucket. Various throttling states are set in accordance with a flow control meter which tracks the load of the outroutes.

A disadvantage of the system according to US 2003/0154272 A1 is the fact, that the controlling the TCP window sizes of the application server and/or by controlling the leak rate involves complicated controlling mechanisms and the administration of various throttling states.

Therefore, it is an object of the invention to provide a method and an apparatus for allocating bandwidth to a plurality of virtual channels within a shared transmission channel which can be implemented on the basis of existing system components without the need to manipulate the underlying transmission protocols.

This object is solved by a method according to claim 1 and an apparatus according to the claim 5.

A method according to the invention comprises the following steps:

a) connecting each virtual channel having a virtual channel bandwidth with one of a plurality of user channels,

b) receiving incoming user data of each connected user channel and measuring the data flow rate of the incoming user data of each connected user channel,

c) setting each virtual channel bandwidth in accordance with the data flow rate of the incoming user data of the corresponding user channel,

d) transmitting outgoing user data corresponding to the incoming user data over the connected virtual channel and queuing the incoming user data if the virtual channel bandwidth is smaller than the data flow rate of the incoming user data,

e) measuring for each connected virtual channel the data flow rate of the outgoing user data,

f) tuning each virtual channel bandwidth such that the sum of the data flow rates of the outgoing user data corresponds to the bandwidth of the shared transmission channel, and

g) repeating steps b) to g).

An apparatus according to the invention comprises:

means for connecting each virtual channel having a virtual channel bandwidth with one of a plurality of user channels,

means for receiving incoming user data of each connected user channel and measuring the data flow rate of the incoming user data of each connected user channel,

means for setting each virtual channel bandwidth in accordance with the data flow rate of the incoming user data of the corresponding user channel,

means for transmitting outgoing user data corresponding to the incoming user data over the connected virtual channel and queuing the incoming user data if the virtual channel bandwidth is smaller than the data flow rate of the incoming user data,

means for measuring for each connected virtual channel the data flow rate of the outgoing user data, and

means for tuning each virtual channel bandwidth such that the sum of the data flow rates of the outgoing user data corresponds to the bandwidth of the shared transmission channel.

Further aspects of the inventive solution result from the features of the sub-claims.

According to one aspect of the invention the setting of each virtual channel bandwidth is carried out stepwise depending on predetermined thresholds of the data flow rate of the incoming user data by means of a course adjustment. For example, the setting of the virtual channel bandwidth is carried out in three steps of 500 kbit/s, 1 Mbit/s or 1,5 Mbit/s. The thresholds of the data flow rate of the incoming user data decide on the switching between the three steps. Preferably, the thresholds of the data flow rate of the incoming user data show a hysteresis behaviour.

According to another aspect of the invention each virtual channel bandwidth is tuned in proportion to a difference between the sum of the data flow rates of the outgoing user data and the bandwidth of the shared transmission channel. In addition to the course adjustment of the virtual channel bandwidth this fine tuning enables to optimize the utilisation of the shared transmission channel by the plurality of virtual channels.

According to another aspect of the invention for each user channel an auxiliary channel is provided in addition to the virtual channel for decreasing the load on the virtual channel.

The invention will now be described by way of an example and with reference to the accompanying drawings in which

Fig. 1     shows a transmission system having a shared satellite transmission channel,

Fig. 2     shows a first embodiment of the transmission station according to Fig. 1 and

Fig. 3     shows a second embodiment of the transmission station according to Fig. 1.

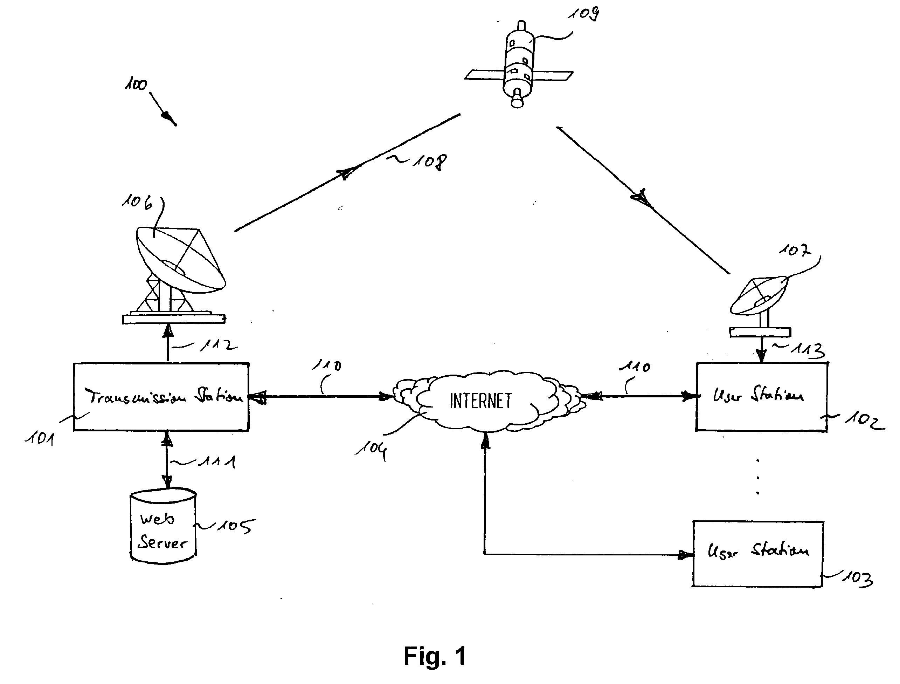

Fig. 1 shows a transmission system having a shared satellite transmission channel. The transmission system 100 comprises a transmission station 101 and a plurality of user stations 102, 103. To simplify matters, only the user station 102 is described in more detail wherein this description applies correspondingly to the other user stations 103.

The transmission system 100 provides to the user station 102 a high-speed access to the data stored in the web server 105 via the transmission station 101. The transmission station 101 is connected to the web server 105 via an Internet backbone connection 111. Furthermore, the transmission station 101 has two connections to the user station 102, namely the bi-directional Internet connection 110 via the Internet 104 and the uni-directional broadcast connection via the satellite link 112, 108, 113, wherein the satellite link comprises an earth station 106, a communication satellite 109 and a receiving station 107.

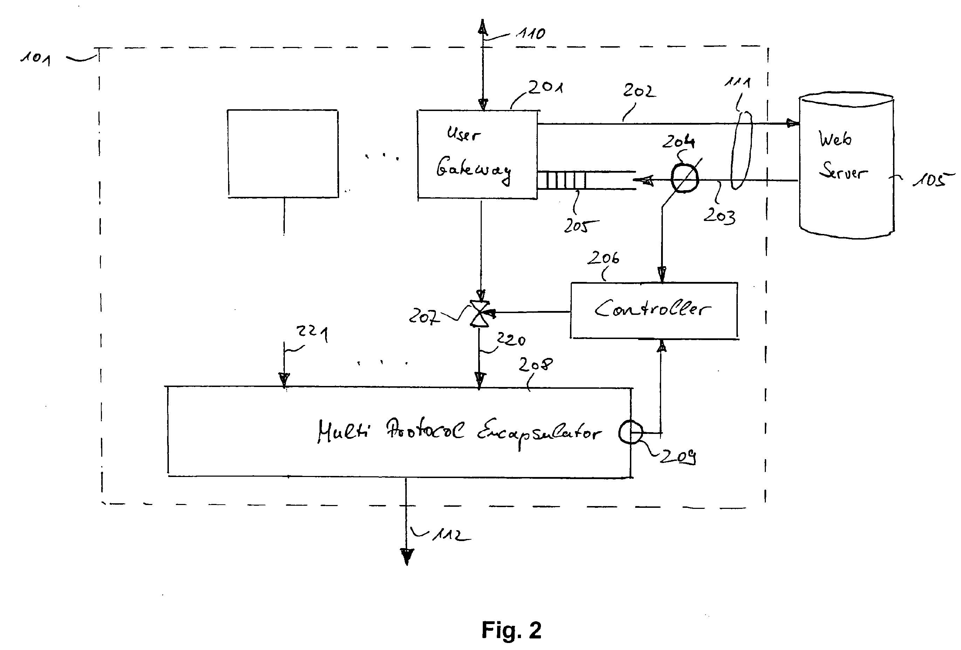

Fig. 2 shows a first embodiment of the transmission station 101 according to Fig. 1. The transmission station 101 is connected as shown in Fig. 1 via the Internet backbone connection 111 to the web server 105 and to the user station 102 both via the bi-directional Internet connection 110 and via the uni-directional satellite connection 112.

The transmission station 101 provides for each of the plurality of user stations 102, 103 a user gateway 201, a data flow meter 204, a data queue 205 and a throttle valve 207. To simplify matters, these components are shown only with regard to one user station, e.g. with regard to the user station 102.

Commonly used components of the transmission station 101 are a controller 206 for controlling all throttle valves of the transmission station 101, a multi protocol encapsulator 208 and a data flow meter 209 connected to the multi protocol encapsulator 208.

Upon a user request of the user station 102 via the bi-directional Internet connection 110, the user gateway 201 starts a system request 202 via the Internet backbone connection 111 to the web server 105. The web server 105 returns a reply 203 via the Internet backbone connection 111. The reply 203 is received as incoming user data in the data queue 205. The data flow rate of the incoming user data is measured in the data flow meter 204 and is input in the controller 206. The controller 206 adjusts both the setting of the throttle valve 207 and the corresponding bandwidth of the connected virtual channel. This means that the setting of the throttle valve 207 generally corresponds to the bandwidth of the corresponding virtual channel. An exception occurs only in those cases in which the available bandwidth of the corresponding virtual channel is saturated due to the limited bandwidth of the shared satellite channel 112. For these cases the setting of the throttle valve 207 might exceed the bandwidth of the corresponding virtual channel wherein the mismatching is again levelled out by the data queue 205.

The outgoing user data 220 are fed to the multi protocol encapsulator 208 which converts the outgoing user data 220 from IP data to DVB data and connects the outgoing user data 220 with a virtual channel within the shared satellite channel.

The data flow rate of all outgoing user data 220 and 221 is measured by the flow meter 209 and is also input in the controller 206. On the basis of the data flow rates measured by the flow meters 204 and 209 the controller 206 controls the throttle valve 207 by a course adjustment and a fine tuning.

A course adjustment of the throttle valve is carried out stepwise on the basis of the data flow rate of the incoming user data 203 using a look up table. A hysteresis behaviour is used in order to suppress switching oscillations around one switching point. A possible look up table is as follows, wherein $R(t)$ is the data flow rate of the incoming user data 203 at the moment of time $t$ and wherein $R(t-1)$ is the corresponding data flow rate of the previous moment of time:

| data flow rate R(t) | R(t) <= 400kbit/s and R(t-1) > 400kbit/s | R(t) >= 600kbit/s and R(t-1) < 600kbit/s |
|---|---|---|
| setting of throttle valve | 0 kbit/s | 500 kbit/s |

| data flow rate R(t) | R(t) <= 900kbit/s and R(t-1) > 900kbit/s | R(t) >= 1100kbit/s and R(t-1) < 1100kbit/s |
|---|---|---|
| setting of throttle valve | 500 kbit/s | 1000 kbit/s |

| data flow rate R(t) | R(t) <= 1400kbit/s and R(t-1) > 1400kbit/s | R(t) >= 1600kbit/s and R(t-1) < 1600kbit/s |
|---|---|---|
| setting of throttle valve | 1000 kbit/s | 1500 kbit/s |

A fine tuning is carried out on the basis of the data flow rate of all outgoing user data 220, 221 measured by the flow meter 209 such that the sum of the data flow rates of the outgoing user data corresponds to the bandwidth of the shared transmission channel. Let the difference between the available bandwidth of the satellite channel $B_S$ and the measured bandwidth $B_D$ of all user data 220, 221 according to the flow meter 209 be:

$$\Delta B = B_S - B_D$$

The correction value for the fine tuning of one throttle valve 207 is then:

$$\Delta b = \frac{b_{actual}}{B_D} \cdot \Delta B$$

wherein $b_{actual}$ is the actual setting of the throttle valve 207.

This means that the setting of each throttle valve controlled by the controller 206 within the transmission station 101 is updated from the fine tuning step (n-1) to the fine tuning step (n) as follows:

$$b_{actual}(n) = b_{actual}(n-1) + \Delta b = b_{actual}(n-1) \cdot \frac{B_S}{B_D}$$

Due to the course adjustment of the throttle valve the data flow rate of the incoming user data 203 is mostly greater than the setting $b_i$ of the corresponding throttle valve (i.e. the corresponding data queue 205 is not empty). Furthermore, in most cases the setting of the throttle valve 207 equals the virtual channel bandwidth of the connected virtual channel. On these assumptions it can be shown that the following relations hold valid between all settings $b_i$ of each of the throttle valves within the transmission station 101:

$$\sum_i b_{i,actual}(n) = B_S$$

and

$$\sum_i b_{i,\text{actual}}(n-1) = B_D$$

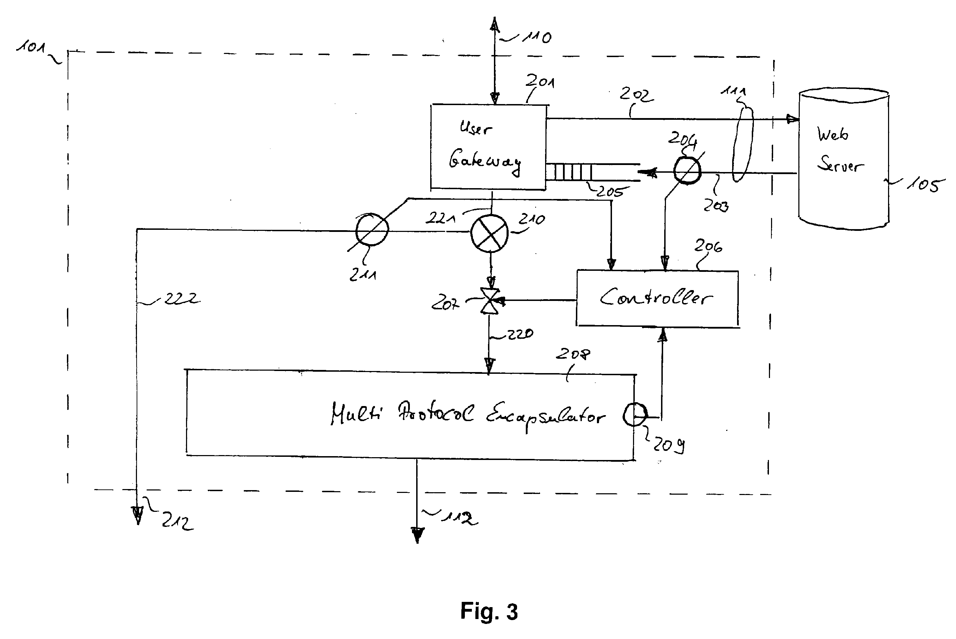

Fig. 3 shows a second embodiment of the transmission station 101 according to Fig. 1. The transmission station of the second embodiment corresponds to the transmission station of the first embodiment except that there is an additional auxiliary channel 212. For example, the internet connection 110 according to Fig. 1 can be used as the auxiliary channel 212.

A switch 210 switches the outgoing user data 221 such that delay of the outgoing user data 222 on the auxiliary channel 212 is approximately equal to the delay of the outgoing user data 220 on the virtual channel within the shared satellite connection. A data flow meter 211 measures the data flow on the auxiliary channel 212 and inputs the measured data flow also in the controller 206. The controller 206 uses the measured data flow of the data flow meter 211 for correcting the value of the data flow meter 204 accordingly.

**Claims**

1.   Method for allocating bandwidth to a plurality of virtual channels within a shared transmission channel, comprising the steps of:

    a) connecting each virtual channel having a virtual channel bandwidth with one of a plurality of user channels,

    b) receiving incoming user data of each connected user channel and measuring the data flow rate of the incoming user data of each connected user channel,

    c) setting each virtual channel bandwidth in accordance with the data flow rate of the incoming user data of the corresponding user channel,

    d) transmitting outgoing user data corresponding to the incoming user data over the connected virtual channel and queuing the incoming user data if the virtual channel bandwidth is smaller than the data flow rate of the incoming user data,

    e) measuring for each connected virtual channel the data flow rate of the outgoing user data,

    f) tuning each virtual channel bandwidth such that the sum of the data flow rates of the outgoing user data corresponds to the bandwidth of the shared transmission channel, and

    g) repeating steps b) to g).

2.   Method according to claim 1, wherein the setting of each virtual channel bandwidth according to step d) is carried out stepwise depending on predetermined thresholds of the data flow rate of the incoming user data.

3.   Method according to one of the claims 1 - 2, wherein each virtual channel bandwidth according to step f) is tuned in proportion to a difference between the sum of the data flow rates of the outgoing user data and the bandwidth of the shared transmission channel.

4.   Method according to one of the claims 1 - 3, wherein for each user channel an auxiliary channel is provided in addition to the virtual channel for decreasing the load on the virtual channel.

5.   Apparatus for allocating bandwidth to a plurality of virtual channels within a shared transmission channel, comprising:

    means for connecting each virtual channel having a virtual channel bandwidth with one of a plurality of user channels,

    means for receiving incoming user data of each connected user channel and measuring the data flow rate of the incoming user data of each connected user channel,

means for setting each virtual channel bandwidth in accordance with the data flow rate of the incoming user data of the corresponding user channel,

means for transmitting outgoing user data corresponding to the incoming user data over the connected virtual channel and queuing the incoming user data if the virtual channel bandwidth is smaller than the data flow rate of the incoming user data,

means for measuring for each connected virtual channel the data flow rate of the outgoing user data, and

means for tuning each virtual channel bandwidth such that the sum of the data flow rates of the outgoing user data corresponds to the bandwidth of the shared transmission channel.

6.  Apparatus according to claim 5, wherein the means for setting of each virtual channel bandwidth sets the corresponding virtual channel bandwidth stepwise depending on predetermined thresholds of the data flow rate of the incoming user data.

7.  Apparatus according to one of the claims 5 - 6, wherein the means for tuning each virtual channel bandwidth tunes the corresponding virtual channel bandwidth in proportion to a difference between the sum of the data flow rates of the outgoing user data and the bandwidth of the shared transmission channel.

8.  Apparatus according to one of the claims 5 - 7, wherein for each user channel an auxiliary channel is provided in addition to the virtual channel for decreasing the load on the virtual channel.

Fig. 1

**Fig. 2**

EP 1 569 390 A1

Fig. 3

**European Patent Office**

**EUROPEAN SEARCH REPORT**

Application Number

EP 04 00 4391

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 02/052800 A (GROENBERG PETRI ; NOKIA CORP (FI)) 4 July 2002 (2002-07-04) * page 8, line 1 - page 9, line 11 * * page 10, line 21 - page 12, line 24; figure 4 * | 1-8 | H04L12/56 |
| A | US 2003/033421 A1 (HOU LI-HO RAYMOND ET AL) 13 February 2003 (2003-02-13) * paragraph [0042] * | 1,5 | |
| A | WO 03/077141 A (PLURIS INC) 18 September 2003 (2003-09-18) * page 4, line 23, paragraph 1 - page 5, line 5 * | 1,2,5,6 | |

TECHNICAL FIELDS SEARCHED (Int.Cl.7)

H04L

The present search report has been drawn up for all claims

| Place of search | Date of completion of the search | Examiner |
|---|---|---|
| The Hague | 3 September 2004 | Perrier, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**          EP 04 00 4391

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2004

| Patent document cited in search report | | Publication date | Patent family member(s) | | Publication date |
|---|---|---|---|---|---|
| WO 02052800 | A | 04-07-2002 | FI<br>CN<br>EP<br>WO<br>US | 20002848 A<br>1478345 T<br>1344352 A1<br>02052800 A1<br>2004057378 A1 | 23-06-2002<br>25-02-2004<br>17-09-2003<br>04-07-2002<br>25-03-2004 |
| US 2003033421 | A1 | 13-02-2003 | NONE | | |
| WO 03077141 | A | 18-09-2003 | US<br>WO | 2002152306 A1<br>03077141 A1 | 17-10-2002<br>18-09-2003 |

EPO FORM P0459

For more details about this annex : see Official Journal of the European Patent Office, No. 12/82